# EUROPÄISCHE PATENTSCHRIFT

(11) **EP 0 992 426 B1**
(45) Veröffentlichungstag und Bekanntmachung des Hinweises auf die Patenterteilung: **08.12.2004**
(21) Anmeldenummer: 99119733.6
(22) Anmeldetag: 05.10.1999
(51) Int. Cl.: B64C 1/14

(54) **Vorrichtung zur Betätigung von Türen für Luftfahrzeuge**
Aircraft door operating mechanism
Mécanisme de fonctionnement de porte d'aèronef

(30) Priorität: 06.10.1998 DE 19845917
(43) Veröffentlichungstag der Anmeldung: 12.04.2000
(73) Patentinhaber: Eurocopter Deutschland GmbH, 86609 Donauwörth (DE)
(72) Erfinder: Braun, Richard, 86703 Rögling (DE)
(74) Vertreter: Baum, Wolfgang, Dipl.-Ing.

(56) Entgegenhaltungen:
- US-A- 4 510 714
- US-A- 4 720 065
- US-A- 5 305 969

## Beschreibung

### TECHNISCHES GEBIET

Die Erfindung betrifft eine Luftfahrzeug-Türanordnung, umfassend eine Tür mit einem Türrahmen, die an einem rumpfseitigen Rahmen eines Luftfahrzeugsrumpfes angeordnet ist und eine Tür-Betätigungseinrichtung, insbesondere für "plug-type"-Türen für seitliche Rumpfteile von Luftfahrzeugen, mit einer Antriebswelle aufweist die, sich quer über die Tür erstreckt.

### STAND DER TECHNIK

Bekannte Luftfahrzeug-Türanordnungen mit einer derartigen Tür-Betätigungseinrichtungen erlauben nur eine manuelle Betätigung der Türen. Außerdem kann mit diesen Betätigungseinrichtungen ein Verkanten der Türen nicht ausgeschlossen werden.

Aus der US-P-4 720 065 ist eine Luftfahrzeug-Türanordnung bekannt, umfassend eine Tür mit einem Türrahmen, die an einem rumpfseitigen Rahmen eines Luftfahrzeugsrumpfes angeordnet ist und eine Tür-Betätigungseinrichtung mit einer Antriebswelle aufweist, die sich quer über die Tür erstreckt. An den Enden der Antriebwelle ist jeweils ein sich rechtwinkelig zur Längsachse der Antriebswelle erstreckender Hebel angeordnet, an dessen freien Ende eine sogenannte Verriegelungsrolle fixiert ist. Die jeweilige Verriegelungsrolle greift in einen Beschlag des rumpfseitigen Rahmens ein. Bei einer Drehbewegung der Antriebswelle wird die Tür über die Verriegelungsrolle relativ zu dem rumpfseitigen Rahmen bewegt und angehoben.

### DARSTELLUNG DER ERFINDUNG

Aufgabe der Erfindung ist es, eine Luftfahrzeug-Türanordnung mit einer Tür-Betätigungseinrichtung für möglichst alle Arten von "plug-type"-Türen zu schaffen, die ein gefahrloses und äußerst zuverlässig ablaufendes Öffnen und Schließen der Türen ohne Verkanten gewährleistet.

Diese Aufgabe wird durch eine erfindungsgemäße Luftfahrzeug-Türanordnung mit den Merkmalen des Anspruchs 1 gelöst. Weitere Ausführungsformen sind in den Unteransprüchen angegeben.

Ein Vorteil der Erfindung ist, dass mit einfachen konstruktiven Mitteln ein Anheben und Absenken der Türen nach einer räumlich vorgegebenen Bewegungslinie erfolgt, so dass ein Verkanten der Tür mit Rumpfteilen des Luftfahrzeugs nahezu ausgeschlossen werden kann. Ein weiterer Vorteil der Erfindung ist, dass die Tür-Betätigungseinrichtung mit einfachen Mitteln angesteuert und kontrolliert werden kann.

Im Folgenden wird die Erfindung anhand der beigefügten Figuren beschrieben werden.

### KURZE BESCHREIBUNG DER ZEICHNUNGEN

Es zeigt:
- Fig. 1: eine schematische Darstellung einer erfindungsgemäßen Luftfahrzeug-Türanordnung mit einer Tür für ein seitliches Rumpfteil eines Luftfahrzeugs, z. B. eines Hubschraubers oder eines Flugzeugs, von der Innenseite des Rumpfs aus gesehen;
- Fig. 2: in einer teilweise geschnittenen, schematischen Darstellung einen wesentlichen Teilbereich einer mit einer Antriebswelle versehenen Tür-Betätigungseinrichtung der Luftfahrzeug-Türanordnung von Fig. 1; und
- Fig. 3: eine Perspektivansicht eines Endbereichs der Antriebswelle von Fig. 1 und 2.

### DARSTELLUNG EINES BEVORZUGTEN AUSFÜHRUNGSBEISPIELS

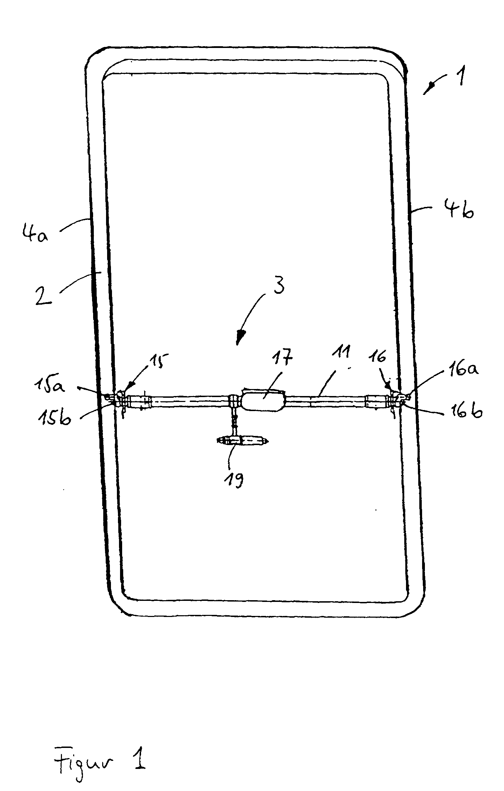

Figur 1 zeigt eine erfindungsgemäße Luftfahrzeug-Türanordnung mit einer Tür 1, einem Türrahmen 2, einem ersten 4a und einem zweiten 4b vertikalen rumpfseitigen Rahmenteil sowie einer Tür-Betätigungseinrichtung 3. Die Tür-Betätigungseinrichtung 3 umfasst eine Antriebswelle 11 (nachfolgend auch Anhebewelle 11 genannt), die sich in etwa in der mittleren Höhe der Tür 1 in deren Breitenrichtung oder etwa in der horizontalen Richtung erstreckt und in etwa zwischen dem ersten 4a und dem zweiten 4b vertikalen rumpfseitigen Rahmenteil verläuft. Im Bereich der vertikalen rumpfseitigen Rahmenteile 4a, 4b ist an den Enden der Anhebewelle 11 jeweils ein Kipphebel 15 bzw. 16 vorgesehen, der jeweils einen ersten Hebel 15a bzw. 16a und jeweils einen zweiten Hebel 15b bzw. 16b aufweist, deren Enden jeweils exzentrisch zur Achse der Anhebewelle 11 gelegen sind. Die Enden der ersten Hebel 15a bzw. 16a sind in nicht gezeigten Lagerstellen in dem entsprechenden Rahmenteil 4a bzw. 4b drehbar gelagert. Der jeweils zweite Hebel 15b bzw. 16b wird in einem entsprechenden Führungsbeschlag (nicht gezeigt) des rumpfseitigen Rahmens geführt. Auf diese Weise kann durch eine Drehbewegung der Antriebswelle 11 die Tür 1 gegenüber dem rumpfseitigen Rahmen angehoben oder abgesenkt werden.

Die Anhebewelle 11 wird von einem Elektromotor 17 angetrieben, der über eine entsprechende Hebelvorrichtung mit einem Traglenker oder Dreieckslenker 19 verbunden ist und über diesen gesteuert wird. Der Traglenker 19 wird wiederum über ein nicht dargestelltes Gestänge angesteuert.

Im folgenden wird die Funktionsweise der erfindungsgemäßen Luftfahrzeug-Türanordnung beschrieben:

In einer Ausgangsstellung, in der die Tür 1 in einer geschlossenen Stellung ist, d.h. in welcher der Türrahmen 2 in dem rumpfseitigen Rahmen eingelassen ist, wird der Elektromotor 17 aufgrund einer entsprechenden Steuerbewegung durch den Traglenker 19 gestartet. Der Elektromotor 17 dreht die Antriebswelle 11 vorzugsweise um einen vorgegebenen Winkelbetrag. Die an den Enden der Antriebswelle 11 vorgesehenen linken 15 und rechten 16 Kipphebel werden durch die Drehung der Antriebswelle 11 gedreht, wobei sich die ersten 15a, 16a und zweiten Kipphebel 15b und 16b in den jeweiligen Führungsbeschlägen der Rahmenteile 4a, 4b bzw. des rumpfseitigen Rahmens abstützen. Dadurch löst sich die Tür 1 von ihrer im rumpfseitigen Rahmen eingelassenen Stellung und bewegt sich gleichmäßig und ohne Verkanten vom Rumpf-Innenraum aus gesehen nach außen und nach oben, d. h. in vertikaler Richtung vom Boden weg.

Der Traglenker 19, der über das nicht gezeigte Gestänge angesteuert wird, hält die Tür 1 in ihrer hochgefahrenen Position. In diesen Zustand kann die Tür 1 gefahrlos geöffnet und geschlossen werden.

Um die Tür 1 abzusenken bzw. zu schließen, wird die Drehbewegung des Elektromotors 17 geändert. Die Tür 1 gleitet dann in vorgegebener Weise in ihre Absenkposition oder im rumpfseitigen Rahmen eingelassene Stellung.

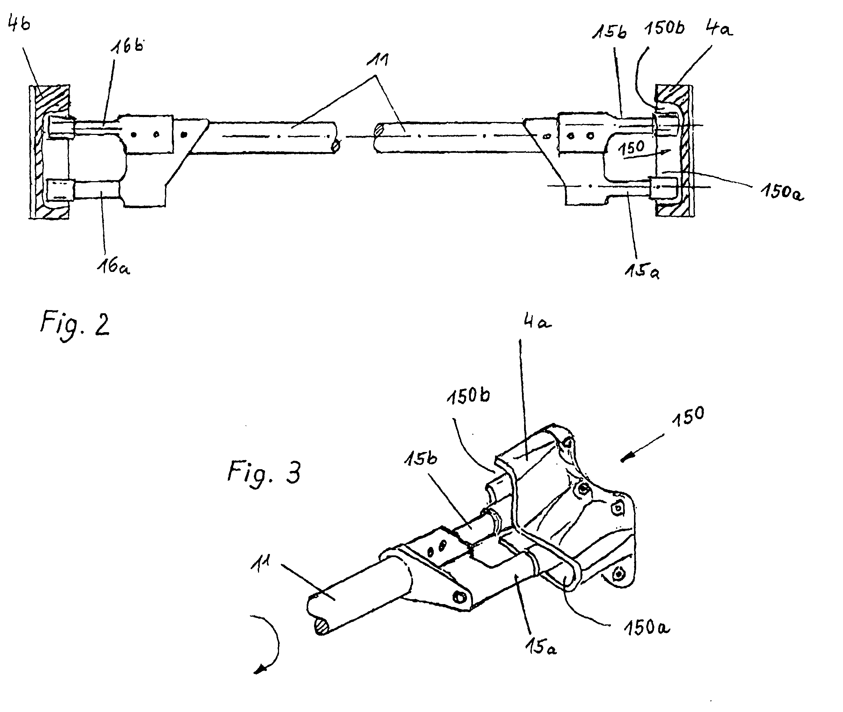

Eine mögliche Ausführungsform zeigen die Figuren 2 und 3, in denen schematisch die Anhebewelle 11 der Tür 1 gezeigt ist. Die Anhebewelle 11 erstreckt sich über die Breite der Tür 1 und greift mit den ersten Hebeln 15a, 16a bzw. den zweiten Hebeln 15b, 16b in die vertikalen Rahmenteile 4a, 4b des Luftfahrzeug-Rumpfes ein. Die ersten Hebel 15a, 16a bzw. die zweiten Hebel 15b, 16b der Anhebewelle 11 sind mit ihrer Längsachse exzentrisch zur Längsachse der Anhebewelle 11 angeordnet. Die ersten Hebel 15a, 16a, und die zweiten Hebel 15b, 16b sind in je einem Führungsbeschlag 150 angeordnet, der jeweils im rumpfseitigen Rahmen eingelassen ist.

In Figur 3 ist ausschnittsweise ein solcher Führungsbeschlag 150 erkennbar. Der erste Hebel 15a befindet sich in einer sogenannten Lagerstelle 150a des Führungsbeschlages 150. Bei Drehung (entsprechend Pfeilrichtung) der Anhebewelle 11 erfolgt eine Drehung um den Hebel 15a. Dabei wird der Hebel 15b entlang der Führung 150b des Führungsbeschlages 150 nach oben geführt. Da die Anhebewelle 11 mit der Tür 1 verbunden ist, erfolgt ein Anheben der Tür 1 entsprechend der Führung 150b. Eine analoge Bewegung vollzieht sich im gegenüberliegenden Führungsbeschlag (nicht gezeigt). Bei entgegengesetzter Drehung der Anhebewelle 11 erfolgt ein Senken der Tür 1. Heben und Senken der Tür 1 erfolgt also mit nur einer Welle.

### Bezugszeichenliste

Es bezeichnen:
- 1: Tür
- 2: Türrahmen
- 3: Tür-Betätigungseinrichtung
- 4a: Erstes vertikales Rahmenteil vom rumpfseitigen Rahmen
- 4b: Zweites vertikales Rahmenteil vom rumpfseitigen Rahmen

- 11: Antriebswelle / Anhebewelle
- 15: Kipphebel
- 15a: Erste Hebel
- 15b: Zweite Hebel
- 16: Kipphebel
- 16a: Erste Hebel
- 16b: Zweite Hebel
- 17: Elektromotor
- 18: -
- 19: Traglenker

- 150: Führungsbeschlag
- 150a: Lagerstelle von 150
- 150b: Führung von 150

## Patentansprüche

1. Luftfahrzeug-Türanordnung, umfassend eine Tür (1) mit einem Türrahmen (2), die an einem rumpfseitigen Rahmen (4a, 4b) eines Luftfahrzeugsrumpfes angeordnet ist und eine Tür-Betätigungseinrichtung (3) mit einer Antriebswelle (11) aufweist, die sich quer über die Tür (1) erstreckt und an deren Enden jeweils ein Kipphebel (15; 16) mit jeweils einem ersten (15a; 16a) und einem zweiten Hebel (15b; 16b) exzentrisch zur Längsachse der Antriebswelle (11) angebracht ist, wobei die ersten Hebel (15a; 16a) jeweils in einem Führungsbeschlag (150) und die zweiten Hebel (15b; 16b) jeweils in einem Führungsbeschlag (150) des rumpfseitigen Rahmens (4a, 4b) geführt sind, und wobei die Tür (1) aufgrund der Drehbewegung der Antriebswelle (11) relativ zu dem rumpfseitigen Rahmen (4a, 4b) bewegt wird.

2. Luftfahrzeug-Türanordnung nach Anspruch 1,
**dadurch gekennzeichnet, dass**
die Antriebswelle (11) von einem Elektromotor (17) angetrieben ist, der von einem Traglenker (19) zu betätigen ist, der über ein Gestänge ansteuerbar ist.

3. Luftfahrzeug-Türanordnung nach Anspruch 1,
**dadurch gekennzeichnet, dass**
der Führungsbeschlag (150) eine Lagerstelle (150a) für den ersten Hebel (15a) und eine Führung (150b) für den zweiten Hebel (15b) besitzt.

## Claims

1. Aircraft door arrangement, comprising a door (1), with a door frame (2), which is disposed on a fuselage-side frame (4a, 4b) of an aircraft fuselage and has a door-operating device (3) with a drive shaft (11), which extends transversely across the door (1) and at the ends of which there is respectively mounted a rocker lever (15; 16) with, respectively, a first (15a; 16a) and a second lever (15b; 16b), disposed eccentrically relative to the longitudinal axis of the drive shaft (11), the first levers (15a, 16a) being respectively guided in a guide fitting (150) and the second levers (15b; 16b) being respectively guided in a guide fitting (150) of the fuselage-side frame (4a, 4b), and the door (1) being moved relative to the fuselage-side frame (4a, 4b) as a result of the rotational movement of the drive shaft (11).

2. Aircraft door arrangement according to claim 1, **characterized in that**
the drive shaft (11) is driven by an electric motor (17) operated by a bearing control handle (19) which is controllable via a linkage.

3. Aircraft door arrangement according to claim 1, **characterized in that**
the guide fitting (150) has a bearing point (150a) for the first lever (15a) and a guide (150b) for the second lever (15b).

## Revendications

1. Agencement de porte d'aéronef, comprenant une porte (1) comportant un cadre de porte (2), qui est disposée sur un cadre (4a, 4b) du côté fuselage d'un fuselage d'aéronef et qui présente un dispositif d'actionnement de porte (3) comportant un arbre moteur (11) qui s'étend transversalement en travers de la porte (1) et sur chaque extrémité duquel est monté de façon excentrée par rapport à l'axe longitudinal de l'arbre moteur (11) un levier à bascule (15; 16) comportant un premier levier (15a; 16a) et un second levier (15b; 16b), les premiers leviers (15a; 16a) étant guidés chacun dans une ferrure de guidage (150) et les seconds leviers (15b; 16b) étant guidés chacun dans une ferrure de guidage (150) du cadre (4a, 4b) du côté fuselage, et la porte (1) étant déplacée par rapport au cadre (4a, 4b) du côté fuselage par suite du mouvement de rotation de l'arbre moteur (11).

2. Agencement de porte d'aéronef suivant la revendication 1, **caractérisé en ce que** l'arbre moteur (11) est entraîné par un moteur électrique (17) à commander par un bras-support (19) attaquable par l'intermédiaire d'une tringlerie.

3. Agencement de porte d'aéronef suivant la revendication 1, **caractérisé en ce que** la ferrure de guidage (150) présente un point d'appui (150a) pour le premier levier (15a) et une glissière (150b) pour le second levier (15b).
